# EUROPÄISCHE PATENTSCHRIFT

(11) **EP 3 143 317 B1**
(45) Veröffentlichungstag und Bekanntmachung des Hinweises auf die Patenterteilung: **28.03.2018**
(21) Anmeldenummer: 15722929.5
(22) Anmeldetag: 08.05.2015
(51) Int. Cl.: F16K 31/06, F16H 61/02, F16H 57/04, F15B 21/04

(54) **ELEKTROMAGNET FÜR EIN HYDRAULIKSYSTEM**
ELECTROMAGNET FOR A HYDRAULIC SYSTEM
ÉLECTROAIMANT POUR SYSTÈME HYDRAULIQUE

(30) Priorität: 16.05.2014 DE 102014007129
(43) Veröffentlichungstag der Anmeldung: 22.03.2017
(73) Patentinhaber: Audi AG, 85045 Ingolstadt (DE); Volkswagen Aktiengesellschaft, 38440 Wolfsburg (DE)
(72) Erfinder: SCHULLER, Dietmar, 93336 Altmannstein (DE); DEIMEL, Andreas, 85055 Ingolstadt (DE); SCHÖFFMANN, Michael, 85101 Lenting (DE); MEYER, Roland, 72622 Nürtingen (DE); RANG, Oliver, 34132 Kassel (DE); CORELL, Christian, 36287 Oberjossa (DE)
(74) Vertreter: Lehle, Josef
(86) Internationale Anmeldenummer: PCT/EP2015/000947
(87) Internationale Veröffentlichungsnummer: WO 2015/172874

(56) Entgegenhaltungen:
- WO-A1-2012/057439
- WO-A1-2013/192003
- US-A- 4 563 664
- US-A- 5 259 414
- US-A1- 2002 162 594
- US-A1- 2005 257 762
- US-A1- 2007 295 413
- US-A1- 2008 315 140
- US-A1- 2009 026 399
- US-A1- 2014 041 742

## Beschreibung

Die Erfindung betrifft ein Elektromagnetventil für ein Hydrauliksystem nach dem Oberbegriff des Patentanspruches 1.

Ein Elektromagnetventil kann beispielhaft als ein Druckregelventil, ein Vorsteuerventil, ein Volumensteuerventil oder ein Schaltventil im Hydrauliksystem eines Automatikgetriebes eines Kraftfahrzeuges arbeiten, um zum Beispiel Getriebekomponenten anzusteuern, etwa Kupplungen oder Aktuatoren zum Gangeinlegen.

Aus der DE 41 33 536 A1 ist ein gattungsgemäßes Elektromagnetventil bekannt, das einen, mit einer Hydraulikleitung strömungstechnisch verbindbaren, mit Hydraulikmedium gefüllten Ankerraum aufweist, in dem ein Anker hubverstellbar gelagert ist. Das im Ankerraum befindliche Hydraulikmedium dient zur Kühlung, Schmierung und hydraulischen Dämpfung des Ankers. Der Anker wirkt mit einem außerhalb des Ankerraums vorgesehenen, elektrisch ansteuerbaren Spulenteil des Elektromagnetventils zusammen. Der Anker weist einen Absperrkörper auf, mit dem zumindest ein Strömungsdurchlass einer Hydraulikleitung ansteuerbar ist. Der Absperrkörper des Ankers drückt gegen eine Rückstellfeder, so dass bei einer Hubbewegung des Ankers der Elektromagnet gegen die Rückstellkraft der Rückstellfeder arbeitet.

Zudem teilt der Anker den Ankerraum in eine, dem Strömungsdurchlass zugewandte Kammer (nachfolgend als durchlassseitige Kammer bezeichnet) und in eine davon abgewandte Innenkammer auf. Bei einer Hubbewegung des verstellbar im Ankerraum des Elektromagnetventils gelagerten Ankers erfolgt zwischen der durchlassseitigen Kammer und der Innenkammer ein Ölaustausch, bei dem das Hydraulikmedium für einen Volumen- oder Druckausgleich von der durchlassseitigen Kammer in die Innenkammer überströmen kann. Der Ölaustausch (Verstellsaugen) tritt bei Hubbewegungen des Ankers auf, wenn das Verdrängungsvolumen in der Innenkammer und in der durchlassseitigen Kammer des Elektromagnetventils unterschiedlich ist.

In einem gängigen, im Fahrzeuggetriebe eingesetzten Elektromagnetventil erfolgt der Ölaustausch zwischen der Innenkammer und/oder der durchlassseitigen Kammer des Elektromagnetventils und der Umgebung üblicherweise mit dem Ölsumpf. Dabei besteht die folgende Problematik: So findet der Ölaustausch direkt zum Ölsumpf statt, der besonders durch den Abrieb vom Radsatz oder der Kupplungen metallische Partikel enthalten kann. Das Hydraulikmedium (nachfolgend als Hydrauliköl bezeichnet) ist daher mit magnetischen Partikeln verunreinigt, die vom Elektromagneten angezogen werden können. Die Partikel können bei einem Ölaustausch in den Ankerraum des Elektromagnetventils gelangen und dort unerwünschte Funktionsbeeinträchtigungen verursachen, zum Beispiel eine Störung des Magnetfeldes, ein Zusetzen des Bewegungskorridors des Ankers sowie eine Veränderung des tribologischen Systems zwischen dem Anker und der, den Ankerraum begrenzenden Innenwandung. Desweiteren verbleiben die Partikel üblicherweise in dem Ankerraum, da hier durch Restmagnetisierung oder aufgrund des Elektromagneten Magnetfelder vorherrschen, die ein Ausspülen verhindern. Zusätzlich wird Schmutz in der Innenkammer durch einen kleinen Ankerspalt zwischen dem Anker und der, den Ankerraum begrenzenden Innenumfangswand abgeschottet.

Zur Steigerung des Reinheitsgrades des Hydrauliköls werden in gängigen Hydrauliksystemen Filter eingesetzt. Durch die Filter wird die Anzahl von Partikeln im Hydrauliksystem reduziert.

Aus der DE 2011 055 093 A1 ist ein Elektromagnetventil bekannt, bei dem der durchlassseitigen Kammer des Ankerraums ein Aufnahmeraum strömungstechnisch vorgelagert ist. In dem Aufnahmeraum ist eine schwimmend gelagerte Scheibe vorgesehen, mit der der Schmutzeintrag in die Innenkammer des Ankerraums des Elektromagnetventils von Verunreinigungspartikel reduziert ist.

Die Aufgabe der Erfindung besteht darin, einen Elektromagneten für ein Hydrauliksystem bereitzustellen, bei dem der Eintrag von Verunreinigungspartikel in den Elektromagnet-Ankerraum in einfacher Weise reduzierbar ist.

US4563664 offenbart ein Elektromagnetventil gemäß dem Oberbegriff des Anspruchs 1.

Die Aufgabe ist durch die Merkmale des Patentanspruches 1 gelöst. Bevorzugte Weiterbildungen der Erfindung sind in den Unteransprüchen offenbart.

Gemäß der Erfindung weist eine zur durchlassseitigen Kammer oder zur Innenkammer des Ankerraums führende Hydraulikleitung zumindest ein als Permanentmagnet ausgebildetes Schmutzfangelement auf, das Verunreinigungen im Hydraulikmedium zurückhält, das bei einem Ölaustausch die Hydraulikleitung durchströmt, wobei das Schmutzfangelement eine an der Innenwandung der Hydraulikleitung gebildete Schmutzfangkontur mit Erhebungen und Vertiefungen ist. Der Boden der Vertiefungen kann darüber hinaus magnetisch ausgeführt sein, um den Rückhalteeffekt der Schmutzfangkontur zu steigern.

In einer Ausführungsform kann der Elektromagnetventil ein Hydraulikölreservoir (nachfolgend als Ölreservoir bezeichnet) aufweisen, in dem Hydraulikmedium gespeichert ist, das im Vergleich zum Hydraulikmedium in der Hydraulikleitung bzw. dem Hydrauliksystem mit weniger Verunreinigungspartikel belastet ist, das heißt einen höheren Reinheitsgrad aufweist. Das Ölreservoir ist mit der durchlassseitigen Kammer des Ankerraums strömungstechnisch verbunden. Das Ölreservoir ist speziell bei einem Ölaustausch wirksam, bei dem Hydrauliköl von der durchlassseitigen Kammer in die Innenkammer überströmt. In diesem Fall stellt das Ölreservoir zumindest teilweise das in die Innenkammer überströmende Verstellvolumen des Hydrauliköls bereit. Auf diese Weise wird der Schmutzeintrag von Verunreinigungspartikel in die Innenkammer reduziert, wodurch die Möglichkeit einer Funktionsbeeinträchtigung des Elektromagneten reduziert wird.

Der Absperrkörper des hubverstellbaren Ankers kann beispielhaft den Strömungsdurchlass zwischen einer zu einem Arbeitsanschluss eines Elektromagnetventils führenden Teilleitung und einer zu einem Tankanschluss des Elektromagnetventils führenden Teilleitung steuern. In diesem Fall kann das Ölreservoir in baulich einfacher Weise unmittelbar an der zum Tankanschluss führenden Teilleitung ausgebildet sein, und zwar durch eine baulich einfache Querschnittserweiterung des Strömungsquerschnitts der Teilleitung. Das Ölreservoir kann bevorzugt als eine taschenförmige Ausnehmung an der Innenwandung der jeweiligen Hydraulikleitung ausgeführt sein.

Wie oben erwähnt, ist der Tankanschluss des Elektromagnetventils über eine Ablaufleitung mit dem Ölsumpf strömungstechnisch in Verbindung. In diesem Fall besteht im Stand der Technik die Problematik, dass bei einem Ölaustausch von der durchlassseitigen Kammer in Richtung auf die Innenkammer verunreinigtes Hydrauliköl aus dem Ölsumpf angesaugt und über den ventilseitigen Tankanschluss sowie die durchlassseitige Kammer bis in die Innenkammer gelangt. Um eine solche Rückströmung von verunreinigtem Hydrauliköl zu vermeiden, kann das Elektromagnetventil einen Strömungsunterbrecher aufweisen. Mittels des Strömungsunterbrechers wird beim Ölaustausch von der durchlassseitigen Kammer in die Innenkammer eine Rückströmung aus dem Ölsumpf bis in die durchlassseitige Kammer verhindert, jedoch eine Ölströmung in umgekehrter Richtung zugelassen.

Zur Realisierung eines solchen Strömungsunterbrechers kann sich die zum sumpfseitigen Tankanschluss führende Teilleitung in einer Hochführung in der Gerätehochrichtung nach oben erstrecken. Der am Ende der Teilleitung vorgesehene Tankanschluss (Auslassöffnung der Teilleitung) kann um einen Höhenversatz geodätisch oberhalb des Ölsumpfes angeordnet sein. Der Tankanschluss kann alternativ oder zusätzlich unter Zwischenschaltung eines Belüftungsfreiraums in Strömungsverbindung mit dem Ölsumpf sein.

In einer technischen Realisierung des Elektromagnetventils kann der Absperrkörper des Ankers gegen eine Rückstellfeder bzw. gegen eine hydraulische Rückführfläche drücken, das heißt der Elektromagnet des Elektromagnetventiles arbeitet gegen eine Rückstellkraft. Die Rückstellfeder kann in einem Federraum angeordnet sein, in dem der Absperrkörper verstellbar geführt ist. Für eine leichtgängige Führung kann der Absperrkörper unter Bildung eines, ein Lagerspiel bereitstellenden Ventilspaltes im Federraum gleitgelagert sein. Der Absperrkörper muss nicht zwingend in einem Federraum gleitgelagert sein, sondern kann anstelle dessen auch in einem beliebigen Hydraulikraum gleitgelagert sein.

Zudem kann der Federraum bzw. der Hydraulikraum mit Umgebungsdruck beaufschlagt sein, das heißt über eine Ablaufleitung mit dem Ölsumpf verbunden sein. In diesem Fall erfolgt durch den Ventilspalt eine Basisleckage von Hydrauliköl über den Hydraulikraum in den Ölsumpf. Der Absperrkörper des Ankers kann bei einer Ausbildung des Elektromagnetventils als Druckregelventil oder als Volumensteuerventil ein axial verschiebbarer Kolben sein, der beispielhaft zumindest einen ersten Ringbund und/oder einen zweiten Ringbund aufweist, die axial voneinander beabstandet sind. Je nach Axialstellung des Kolbens kann die Steuerkante des ersten Ringbundes einen Strömungsdurchlass zwischen einem ventilseitigen Druckanschluss, der zu einer Druckquelle führt, und dem ventilseitigen Arbeitsanschluss freigeben oder verschließen, der zu einem hydraulischen Verbraucher, das heißt einer Getriebekomponente führt. In gleicher Weise kann die Steuerkante des zweiten Anker-Ringbundes einen Strömungsdurchlass zwischen dem ventilseitigen Tankanschluss und dem ventilseitigen Arbeitsanschluss freigeben oder verschließen. Die Druckquelle kann eine Hydraulikpumpe sein, deren Saugseite strömungstechnisch mit dem Ölsumpf in Verbindung steht.

Der oben erwähnte Ventilspalt zwischen dem Hydraulikraum und dem darin verschiebbar geführten Absperrkörper ist in der technischen Umsetzung äußerst gering. Der Ventilspalt wirkt daher als ein Rückhaltemittel, das Verunreinigungspartikel im abfließenden Hydrauliköl abfängt. Daher weist das in den Hydraulikraum einströmende Hydrauliköl einen größeren Reinheitsgrad auf als das Hydrauliköl in der Hydraulikleitung.

In einer bevorzugten Ausführungsform wird das im Hydraulikraum befindliche, spaltgefilterte Hydrauliköl nicht ungenutzt in den Ölsumpf rückgeleitet, sondern für den Ölaustausch bereitgehalten, bei dem ein Öl-Verstellvolumen in die Innenkammer überströmt. Hierzu ist das Ölreservoir unter Querschnittserweiterung des Hydraulikraums oder der Ablaufleitung gebildet. Der Hydraulikraum/die Ablaufleitung kann über eine Verbindungsleitung unmittelbar mit der durchlassseitigen Kammer verbunden sein. Im Ölaustausch-Fall kann somit das spaltgefilterte Hydrauliköl von dem Hydraulikraum über die Verbindungsleitung und die durchlassseitige Kammer bis in die Innenkammer geführt werden.

In einer weiteren Ausführungsform kann die durchlassseitige Kammer des Ankerraums mittels einer Ventilgehäusewand von der Hydraulikleitung getrennt sein. Die Ventilgehäusewand kann eine Lageröffnung aufweisen, durch die der Absperrkörper des Ankers geführt ist, und zwar unter Bildung eines, ein Lagerspiel bereitstellenden Ventilspaltes. Im Hinblick auf einen Druckausgleich zwischen der Hydraulikleitung und der durchlassseitigen Kammer kann eine Ausgleichsleitung bereitgestellt sein, über die beim Ölaustausch zumindest teilweise das Verstellvolumen des Hydrauliköls führbar ist.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend von Zeichnungen näher erläutert.

Es zeigen:
- Fig. 1a, 1b und 1c: in einer grob schematischen Darstellung ein nicht von der Erfindung umfasstes Elektromagnetventil in unterschiedlichen Betriebszuständen;
- Fig. 2 bis 5: jeweils Ansichten entsprechend der Fig. 1b, die jeweils unterschiedliche Ausführungsbeispiele des erfindungsgemäßen Elektromagnetventils zeigen;
- Fig. 6: in einer Detailansicht eine zur durchlassseitigen Kammer des Ankerraums führende Verbindungsleitung mit einem Schmutzfangelement; wobei das Schmutzfangelement nicht gemäß der Erfindung ausgebildet ist;
- Fig. 7 bis 10: jeweils Ansichten entsprechend der Fig. 6 mit alternativen Schmutzfangelementen, wobei die Schmutzfangelemente der Figuren 7 und 10 nicht gemäß der Erfindung ausgebildet sind.

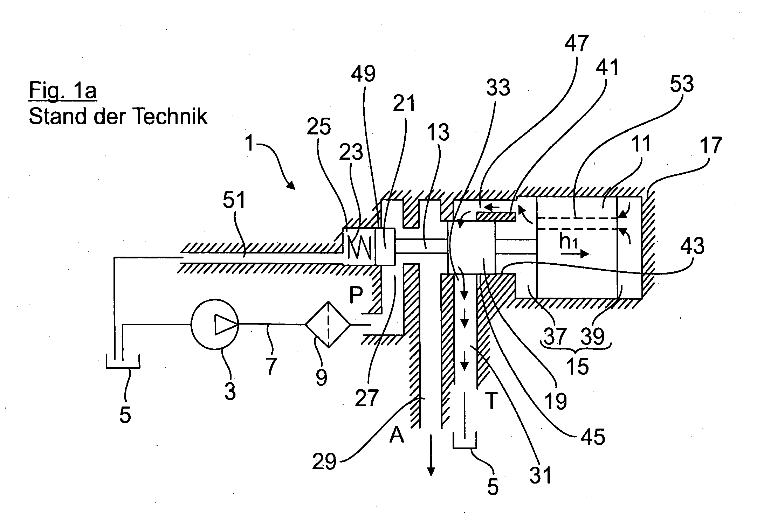

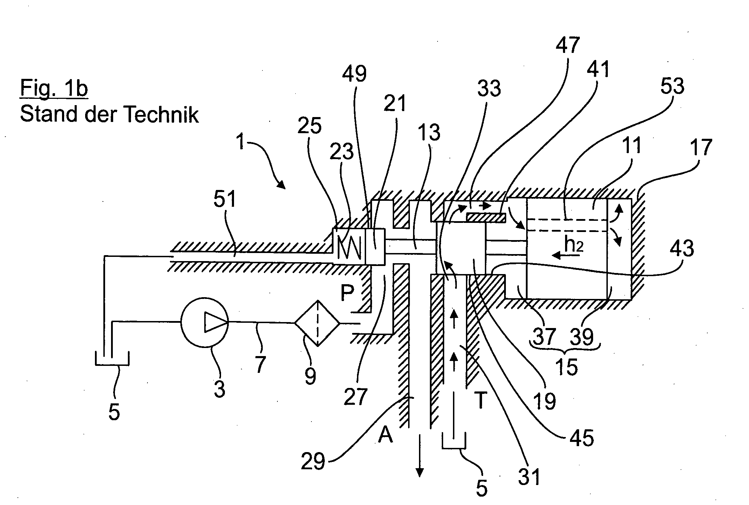

In der Fig. 1a und 1b sind zum einfacheren Verständnis der Erfindung zunächst ein nicht von der Erfindung umfasstes Vergleichsbeispiel gezeigt, in dem ein Elektromagnetventil 1 in einem teilweise dargestellten Hydrauliksystem eines Automatikgetriebes geschaltet ist. Das Hydrauliksystem weist eine Hydraulikpumpe 3 auf, die saugseitig mit einem Ölsumpf 5 verbunden ist und druckseitig über eine Druckleitung 7 an einem Druckanschluss P des Elektromagnetventils 1 angeschlossen ist. Das Elektromagnetventil 1 weist zudem einen Arbeitsanschluss A auf, der über eine nicht gezeigte Arbeitsleitung mit einer Hydraulikkomponente des Getriebes, zum Beispiel einer Kupplung oder eines Aktuators zum Gangeinlegen verbunden ist. Zudem weist das Elektromagnetventil 1 einen Tankanschluss T auf, der ebenfalls mit dem Ölsumpf 5 strömungstechnisch in Verbindung ist. Um Verunreinigungspartikel aus dem Hydrauliköl zu entfernen, ist in der Druckleitung 7 ein Filter 9 geschaltet.

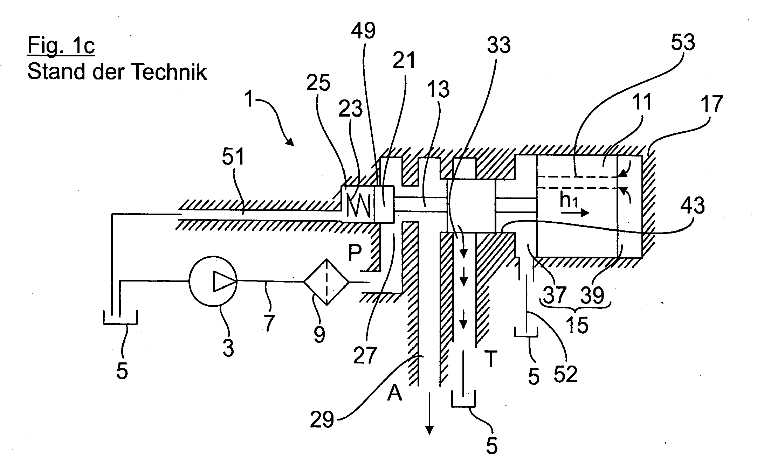

In der Fig. 1 a und 1b ist das Elektromagnetventil beispielhaft ein direkt gesteuertes Druckregelventil mit einem axialhubverstellbaren Anker 11, der mit einem Kolben 13 verlängert ist. Der Anker 11 ist in einem Ankerraum 15 hubverstellbar geführt, der mit Hydrauliköl gefüllt ist und strömungstechnisch mit dem Hydraulikweg innerhalb des Elektromagnetventils 1 verbunden ist. Der Ankerraum 15 ist durch ein schraffiert angedeutetes Ventilgehäuse 17 begrenzt, wobei außerhalb des Ankerraums 15 eine nicht gezeigte Elektromagnet-Spule angeordnet ist, die von einem Getriebesteuergerät ansteuerbar ist, um den Anker 11 mittels Elektromagnetkraft zu verstellen.

Der Kolben 13 des Ankers 11 weist in der Fig. 1 a und 1b einen ersten Ringbund 19 und einen zweiten durchmesserkleineren Ringbund 21 auf, die axial voneinander beabstandet am Kolben 13 ausgebildet sind. Die vom Anker 11 abgewandte Stirnseite des Kolbens 13 ist gegen eine Rückstellfeder 23 abgestützt, die in einem Federraum 25 positioniert ist.

Je nach Axialstellung des Kolbens 13 wird eine Steuerkante des ersten Ringbunds 19 mehr oder weniger in Überdeckung mit einem Strömungsdurchlass 33 zwischen einer zum Arbeitsanschluss A führenden Teilleitung 29 und einer zum Tankanschluss T führenden Teilleitung 31 gebracht. Entsprechend wird die Steuerkante des zweiten Ringbundes je nach Kolben-Axialstellung mehr oder weniger in Überdeckung mit dem Strömungsdurchlass 27 zwischen der zum Druckanschluss P führenden Teilleitung 35 und der zum Arbeitsanschluss A führenden Teilleitung 29 gebracht.

Wie aus der Fig. 1 a und 1b weiter hervorgeht, ist der Ankerraum 15 mittels des hubverstellbaren Ankers 11 in eine den Strömungsdurchlässen 27, 33 zugewandte Kammer 37 und in eine davon abgewandte Innenkammer 39 aufgeteilt. Die strömungsseitige Kammer 37 ist über eine ventilgehäuseseitige Trennwand 41 von der zum Tankanschluss T führenden Teilleitung 31 abgetrennt. Die Trennwand 41 weist eine Lageröffnung 43 auf, in der der Ringbund 19 des Kolbens 13 unter Bildung eines, ein Lagerspiel bereitstellenden Ventilspalts 45 gelagert ist. Zudem weist die Trennwand 41 eine Verbindungsleitung 47 auf, mit der die durchlassseitige Kammer 37 und die zum Tankanschluss T führende Teilleitung 31 miteinander verbunden sind.

Der durchmesserkleinere, zweite Ringbund 21 ist unter Bildung eines weiteren, ein Lagerspiel bereitstellenden Ventilspalts 49 in dem Federraum 25 verstellbar gelagert. Vom Federraum 25 führt zudem eine Ablaufleitung 51 zum Ölsumpf 5, wodurch der Federraum 25 mit Umgebungsdruck beaufschlagt ist.

Bei einer Hubverstellung h₁, h₂ des Ankers 11 aufgrund einer entsprechenden Ansteuerung des Spulenteils des Elektromagnetventils erfolgt zwischen der strömungsseitigen Kammer 37 und der Innenkammer 39 ein Ölaustausch. Beispielhaft wird in der Fig. 1 a der Anker 11 durch eine Hubverstellung h₁ in den Ankerraum 15 eingefahren. Dadurch wird ein Verstellvolumen des Hydrauliköls von der Innenkammer 39 über eine gestrichelt gezeigte Ausgleichsleitung 53 im Anker 11 zur strömungsseitigen Kammer 37 geleitet. Diese ist jedoch volumenkleiner als die Innenkammer 39, so dass das Verstellvolumen zumindest teilweise über die Verbindungsleitung 47 und über die Teilleitung 31 zum Ölsumpf 5 geführt wird, wie es in der Fig. 1 a mit Pfeilen angedeutet ist.

In der Fig. 1b wird dagegen der Anker 11 mittels Hubverstellung h₂ aus dem Ankerraum 15 ausgefahren. Bei einem solchen Ölaustausch besteht in der Fig. 1b die Problematik, dass verunreinigtes Hydrauliköl vom Ölsumpf 5 über den Tankanschluss T, die Teilleitung 31 sowie die Verbindungsleitung 47 in die strömungsseitige Kammer 37 gesaugt und von dort weiter über die Ausgleichsleitung 53 bis in die Innenkammer 39 gesaugt wird, wodurch sich Verunreinigungspartikel in der Innenkammer 39 sammeln können.

Die oben dargelegte Problematik gilt auch für das in der Fig. 1c gezeigte Ventil, das grundsätzlich baugleich wie das in den Fig. 1 a und 1b gezeigte Ventil ausgeführt ist. Im Unterschied zur Fig. 1 a und 1b ist in der Fig. 1c die durchlassseitige Kammer 37 über eine Ablaufleitung 52 unmittelbar mit dem Ölsumpf 5 verbunden, so dass bei der Hubverstellung h₂ das verunreinigte Hydrauliköl unmittelbar vom Ölsumpf 5 über die Ablaufleitung 52 in die durchlassseitige Kammer 37 gelangt.

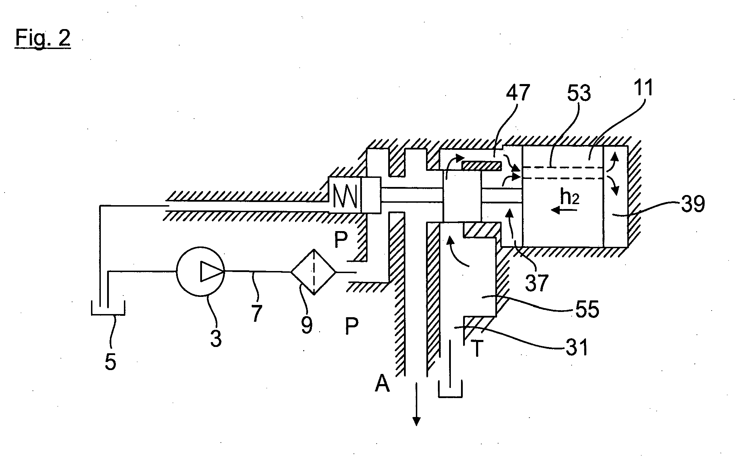

Um ein solches Verstellsaugen von verunreinigtem Hydrauliköl bis in die Innenkammer 39 zu vermeiden, weist das Elektromagnetventil 1 in der Fig. 2 ein Ölreservoir 55 auf, in dem Hydrauliköl gespeichert ist, das im Vergleich zum Hydrauliköl in den Hydraulikleitungen 29, 31, 35 einen höheren Reinheitsgrad aufweist, das heißt weniger mit Verunreinigungspartikel durchsetzt ist. In der Fig. 2 ist das Ölreservoir 55 nach Art einer taschenförmigen Ausnehmung in der Innenwandung der zum Tankanschluss T führenden Teilleitung 31 ausgebildet. Das Ölreservoir 55 bildet hier eine Totzone, in der sich das Hydrauliköl nur mit eingeschränkter Strömungsgeschwindigkeit bewegt, wodurch Verunreinigungspartikel sedimentieren können. Dadurch erhöht sich der Reinheitsgrad des darin befindlichen Hydrauliköls. Der Reinheitsgrad des im Ölreservoir 55 gespeicherten Hydrauliköls wird durch den folgenden Umstand weiter erhöht: So erfolgt das Befüllen des Ölreservoirs 55 während des Hydraulikbetriebs nicht durch verunreinigtes Hydrauliköl aus dem Ölsumpf 5, sondern vielmehr während des Hydraulikbetriebes, wenn das bereits mittels des Filters 9 vorgefilterte Hydrauliköl 5 zum Druckabbau über die zum Tankanschluss T führende Leitung 31 in den Ölsumpf 5 geleitet wird.

Bei einem, in der Fig. 2 durch die Pfeile angedeuteten Ölaustausch (aufgrund der Hubverstellung h₂) wird somit zum großen Teil das durch Sedimentation und Filterung (durch Filter 9) gereinigte Hydrauliköl - und nicht das hochverunreinigte Hydrauliköl aus dem Ölsumpf 5 - als Verstellvolumen bereitgestellt, das beim Ölaustausch in die Innenkammer 39 verdrängt wird.

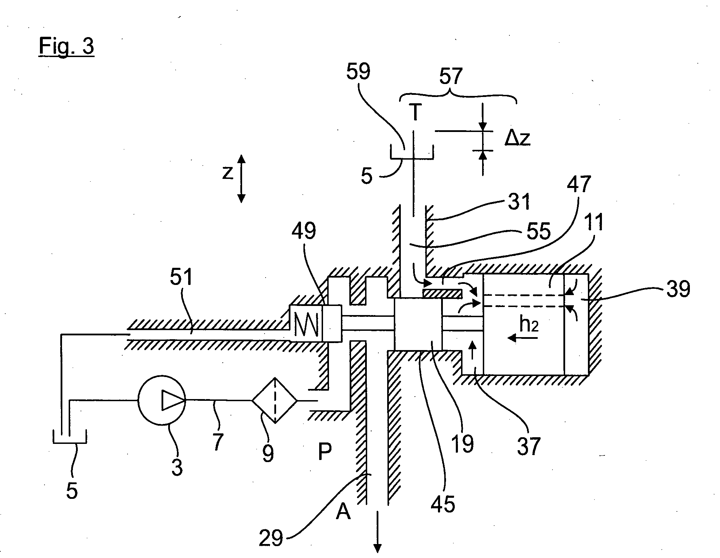

In der Fig. 3 weist das Elektromagnetventil 1 darüber hinaus einen Strömungsunterbrecher 57 auf, der beim Ölaustausch von der durchlassseitigen Kammer 37 in die Innenkammer 39 (siehe Pfeile in der Fig. 3) eine Strömungsverbindung zum Ölsumpf 5 unterbricht, wodurch eine Rückströmung von verunreinigtem Hydrauliköl in die durchlassseitige Kammer 37 und weiter in die Innenkammer 39 verhindert ist. Zur Bildung des Strömungsunterbrechers 57 ist in der Fig. 3 die zum sumpfseitigen Tankanschluss T führende Teilleitung 31 in einer Hochführung in der Gerätehochrichtung z nach oben geführt. Der Tankanschluss T ist in der Fig. 3 durch eine nach oben offene, freie Auslassöffnung realisiert, die um einen Höhenversatz Δz geodätisch oberhalb des Ölsumpfes 5 angeordnet ist. Zwischen dem Tankanschluss T (das heißt der freien Auslassöffnung) und dem Ölsumpf 5 ist zudem ein Belüftungsfreiraum 59 geschaltet, der die oben erwähnte Rückströmung verhindert. Die zum Tankanschluss T führende Teilleitung 31 bildet in der Fig. 3 das Ölreservoir 55.

In der Fig. 3 ist eine Ventilstellung gezeigt, bei der der Ringbund 19 des Absperrkörpers 13 das kaminartig ausgeführte Ölreservoir 55 schließt. In diesem Betriebszustand erfolgt eine Spaltfiltration, bei der das Hydrauliköl durch den Ventilspalt am Ringbund 19 des Absperrkörpers 13 in die durchlassseitige Kammer 37 gespeist wird und so das kaminartige Ölreservoir 55 befüllt.

Zudem erfolgt ein Befüllen des Ölreservoirs 55, wenn der Ringbund 19 des Absperrkörpers 13 einen Strömungsspalt zum Ölreservoir 55 öffnet. In diesem Fall wird das bereits vom Filter 9 gefilterte Öl in das Ölreservoir 55 gespeist.

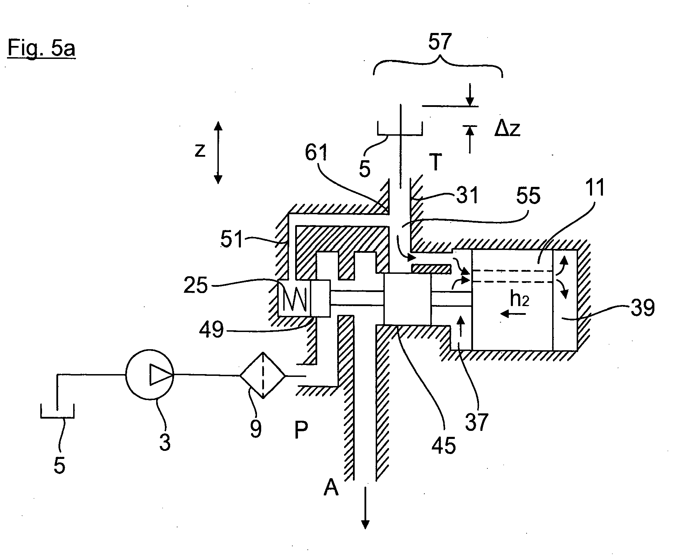

In der Fig. 5a ist eine weitere Ausführungsvariante gezeigt, deren grundsätzlicher Aufbau identisch mit der Fig. 3 ist. In der Fig. 5a wird das im Rahmen der Basisleckage durch den Ventilspalt 45 in den Federraum 25 einströmende, das heißt bereits spaltgefilterte Hydrauliköl für den oben erwähnten Ölaustausch bereitgestellt. Hierzu ist die Ablaufleitung 51 nicht mehr unmittelbar zum Ölsumpf 5 geführt, sondern vielmehr unter Zwischenschaltung der zum Tankanschluss T führenden Teilleitung 31. Die Ablaufleitung 51 mündet nämlich in einer Verzweigungsstelle 61 in die als Ölreservoir 55 dienende, bevorzugt kaminartige Teilleitung 31.

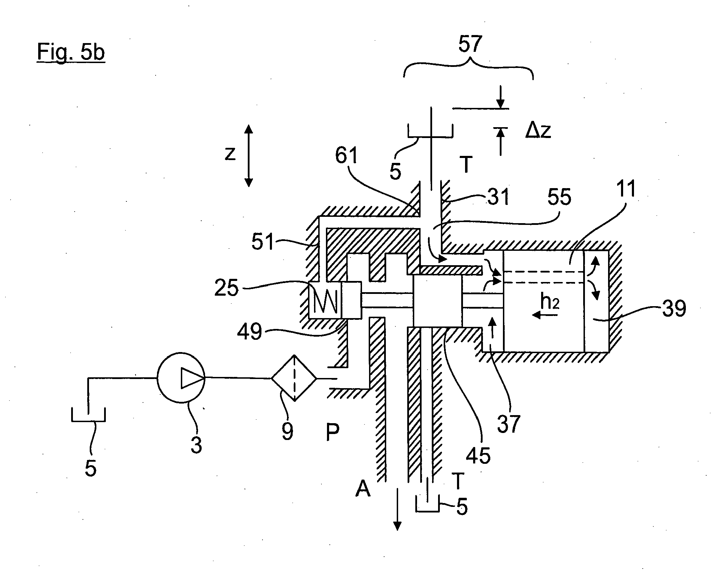

Das in der Fig. 5b gezeigte Ventil ist im Wesentlichen baugleich wie das in der Fig. 5a gezeigte Ventil. Im Unterschied zur Fig. 5a ist in der Fig. 5b ein zweiter Tankanschluß T vorgesehen. In der Fig. 5b wird das Ölreservoir 55 durch eine Spaltleckage gefüllt, bei der spaltgefiltertes Lecköl aus dem Federraum 25 in das Ölreservoir 55 gespeist wird. In der Fig. 5b wird somit das Ölreservoir 55 ausschließlich mit spaltgefiltertem Öl gefüllt, wodurch der Reinheitsgrad des im Ölreservoir 55 gespeicherten Öls weiter gesteigert ist.

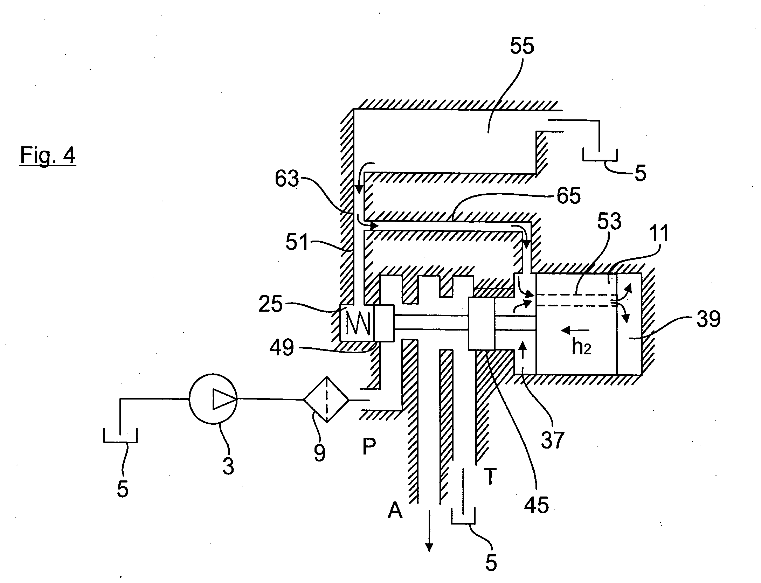

In der Fig. 4 wird ebenfalls das in den Federraum 25 einströmende, spaltgefilterte Hydrauliköl als Verstellvolumen für den Ölaustausch verwendet. Demzufolge ist die vom Federraum 25 abzweigende Ablaufleitung 51 unter Zwischenordnung des Ölreservoirs 55 mit dem Ölsumpf 5 in Verbindung. Zudem ist an einer Verzweigungsstelle 63 zwischen Federraum 25 und dem Ölreservoir 55 eine Verbindungsleitung 65 abgezweigt, die unmittelbar zur strömungsseitigen Kammer 37 führt. Das beim Ölaustausch erforderliche Verstellvolumen wird somit vollständig durch das spaltgefilterte Hydrauliköl bereitgestellt. Bei der in der Fig. 4 gezeigten Leitungsführung kann auf die Verbindungsleitung 47 verzichtet werden, die die Teilleitung 31 mit der strömungsseitigen Kammer 37 verbindet, wie es in den vorangegangenen Fig. 1 bis 3 und 5 der Fall ist.

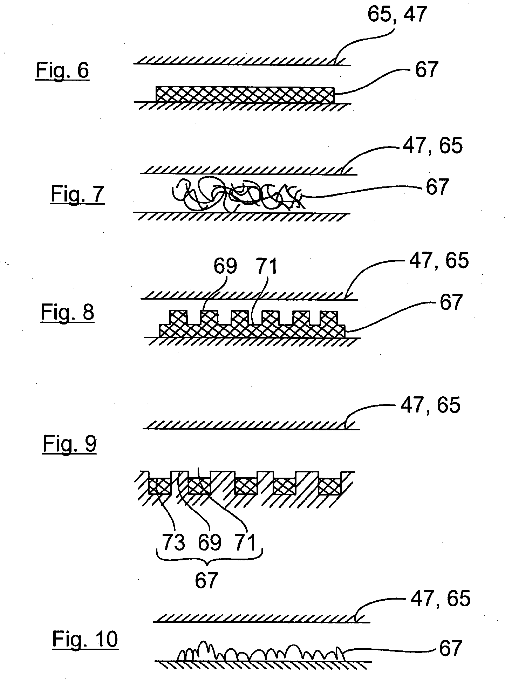

In den folgenden Fig. 6 bis 10 sind unterschiedliche Ausführungsbeispiele der Verbindungsleitungen 47, 65 dargestellt. Gemäß der Fig. 6 ist innerhalb der Verbindungsleitung 47, 65 ein stabartiger Permanentmagnet 67 angeordnet. Der Permanentmagnet wirkt als ein Schmutzfangelement, mit dem ferromagnetische Verunreinigungspartikel aus dem vorbeiströmenden Hydrauliköl entfernt werden können. Alternativ dazu ist in der Fig. 7 das Schmutzfangelement kein stabartiger Permanentmagnet, sondern vielmehr ein strömungsdurchlässiges Geflecht, das von Hydrauliköl durchströmbar ist. Das Geflecht kann bevorzugt aus einem magnetischen Material gebildet sein.

In der Fig. 8 ist das Schmutzfangelement eine Schmutzfangkontur mit Erhebungen 69 und Vertiefungen 71. Die Schmutzfangkontur 67 ist in der Fig. 8 aus einem magnetischen Material ausgeführt. In der Fig. 9 ist das Schmutzfangelement ebenfalls als Schmutzfangkontur mit Erhebungen 69 und Vertiefungen 71 ausgeführt. Im Unterschied zur Fig. 8 sind in der Fig. 9 jedoch lediglich die Böden 73 der Vertiefungen 71 magnetisch ausgeführt.

In der Fig. 10 ist ein Ausführungsbeispiel gezeigt bei der das Schmutzfangelement ein Gewebe ist, die nach Art einer Fußmatte bodenseitig in der Verbindungsleitung eingelegt ist. Im Hydraulikbetrieb sedimentierten Schmutzpartikel aus dem Öl in das Gewebe und verfangen sich dort.

## Patentansprüche

1. Elektromagnetventil für ein Hydrauliksystem, insbesondere für ein Automatikgetriebe eines Kraftfahrzeugs, mit einem, mit Hydraulikleitungen des Hydrauliksystems strömungstechnisch verbindbaren, mit Hydraulikmedium gefüllten Ankerraum (15), in dem ein Anker (11) hubverstellbar (h₁, h₂) gelagert ist, der einen Absperrkörper (13) aufweist, welcher Anker (11) den Ankerraum (15) in eine dem Strömungsdurchlass (27, 33) zugewandte, durchlassseitige Kammer (37) und in eine davon abgewandte Innenkammer (39) aufteilt, wobei bei einer Hubbewegung (h₁, h₂) des Ankers (11) ein Ölaustausch erfolgt, bei dem ein Verstellvolumen des Hydraulikmediums von der durchlassseitigen Kammer (37) in die Innenkammer (39) überströmt, wobei eine zur durchlassseitigen Kammer (37) oder zur Innenkammer (39) des Ankerraums (15) führende Hydraulikleitung (47, 53, 63, 65, 51, 55) zumindest ein als Permanentmagnet ausgebildetes Schmutzfangelement (67) aufweist, das Verunreinigungen im Hydraulikmedium zurückhält, das bei einem Ölaustausch die Hydraulikleitung (47, 53, 63, 65, 51, 55) durchströmt, **dadurch gekennzeichnet, dass** das Schmutzfangelement (67) eine an der Innenwandung der Hydraulikleitung (47, 53, 65) gebildete Schmutzfangkontur mit Erhebungen (69) und Vertiefungen (71) ist.

2. Elektromagnetventil nach Anspruch 1, **dadurch gekennzeichnet, dass** der Boden (73) der Vertiefungen (71) magnetisch ausgeführt ist.

3. Elektromagnetventil nach einem der vorhergehenden Ansprüche, **dadurch gekennzeichnet, dass** zur Bereitstellung des in die Innenkammer (39) überströmenden Verstellvolumens des Hydraulikmediums das Elektromagnetventil (1) ein Hydraulikmedium-Reservoir (55) aufweist, dessen Hydraulikmedium im Vergleich zum Hydraulikmedium in der Hydraulikleitung (29, 31, 35) einen höheren Reinheitsgrad aufweist und das mit der durchlassseitigen Kammer (37) strömungstechnisch verbunden ist, und dass insbesondere das Hydraulikmedium-Reservoir (55) zumindest teilweise mit spaltgefiltertem Hydraulikmedium gefüllt ist.

4. Elektromagnetventil nach Anspruch 3, **dadurch gekennzeichnet, dass** mittels des Absperrkörpers (13) der Strömungsdurchlass (33) zwischen einer zu einem Arbeitsanschluss (A) des Elektromagnetventils (1) führenden Teilleitung (29) und einer zu einem sumpfseitigen Tankanschluss (T) führenden Teilleitung (31) gesteuert ist, und dass insbesondere das Hydraulikmedium-Reservoir (55) unter Querschnittserweiterung der zum sumpfseitigen Tankanschluss (T) führenden Teilleitung (31) gebildet ist.

5. Elektromagnetventil nach Anspruch 4, **dadurch gekennzeichnet, dass** das Elektromagnetventil (1) einen Strömungsunterbrecher (57) aufweist, der beim Ölaustausch von der durchlassseitigen Kammer (37) in die Innenkammer (39) eine Rückströmung von verunreinigtem Hydraulikmedium aus einem Hydraulikmedium-Sumpf (5) in den Tankanschluss (T) oder in die durchlassseitige Kammer (37) verhindert.

6. Elektromagnetventil nach Anspruch 5, **dadurch gekennzeichnet, dass** zur Bildung des Strömungsunterbrechers (57) die zum sumpfseitigen Tankanschluss (T) führende Teilleitung (31) in einer Hochführung in einer Gerätehochrichtung (z) nach oben geführt ist, und/oder dass der sumpfseitige Tankanschluss (T) um einen Höhenversatz (Δz) geodätisch oberhalb des Hydraulikmedium-Sumpfes (5) angeordnet ist, und/oder dass der Tankanschluss (T) unter Zwischenschaltung eines Belüftungsfreiraums (59) in Strömungsverbindung mit dem Hydraulikmedium-Sumpf (5) ist.

7. Elektromagnetventil nach einem der vorhergehenden Ansprüche, **dadurch gekennzeichnet, dass** der Absperrkörper (13) des Ankers (11) in einem Hydraulikraum verstellbar geführt ist, und zwar unter Bildung eines, ein Lagerspiel bereitstellenden Ventilspalts (45, 49) zwischen dem Hydraulikraum und dem Absperrkörper (13), und dass insbesondere der Hydraulikraum über eine Hydraulikleitung mit einen Hydraulikmedium-Reservoir verbunden ist, so dass durch den Ventilspalt (45, 49) eine Leckage von spaltgefiltertem Hydraulikmedium in den Hydraulikraum erfolgt, und dass insbesondere das spaltgefilterte Hydraulikmedium in das Hydraulikmedium-Reservoir (55) füllbar ist.

8. Elektromagnetventil nach Anspruch 7, **dadurch gekennzeichnet, dass** das Hydraulikmedium-Reservoir (55) unter Querschnittserweiterung des Hydraulikraums (25) und/oder der Ablaufleitung (51) gebildet ist, und/oder dass der Hydraulikraum (25) und/oder die Ablaufleitung (51) über eine Verbindungsleitung (65) mit der durchlassseitigen Kammer (37) oder der Innenkammer (39) verbunden ist, und dass über die Verbindungsleitung (65) zumindest teilweise das Verstellvolumen des Hydraulikmediums beim Ölaustausch geführt ist, und dass das Schmutzfangelement (67) insbesondere der Verbindungsleitung (65) zugeordnet ist.

9. Elektromagnetventil nach einem der vorhergehenden Ansprüche, **dadurch gekennzeichnet, dass** die durchlassseitige Kammer (37) des Ankerraums (15) über eine Ventilgehäusewand (41) von der Hydraulikleitung (31) getrennt ist, und dass die Ventilgehäusewand (41) eine Lageröffnung (43) aufweist, durch die der Absperrkörper (13) unter Bildung eines, ein Lagerspiel bereitstellenden Ventilspalts (45) geführt ist, und/oder dass insbesondere die durchlassseitige Kammer (37) mittels einer Verbindungsleitung (47) mit der Hydraulikleitung (31) verbunden ist, und dass über die Verbindungsleitung (47) zumindest teilweise das Verstellvolumen des Hydraulikmediums beim Ölaustausch geführt ist, und dass insbesondere das Schmutzfangelement (67) der Verbindungsleitung (47) zugeordnet ist.

10. Elektromagnetventil nach einem der vorhergehenden Ansprüche, **dadurch gekennzeichnet, dass** der Absperrkörper (13) des Ankers (11) ein axial verschiebbarer Kolben mit einem zumindest ersten Ringbund (19) und/oder zweiten Ringbund (21) ist, und dass die Steuerkante des zweiten Ringbunds (21) je nach Axialstellung des Kolbens (13) einen Strömungsdurchlass (27) zwischen einem Druckanschluss (P) einer Druckquelle (3) und dem Arbeitsanschluss (A) freigibt oder verschließt, und die Steuerkante des ersten Ringbunds (19) einen Strömungsdurchlass (27) zwischen dem Tankanschluss (T) und dem Arbeitsanschluss (A) freigibt oder verschließt.

## Claims

1. Electromagnetic valve for a hydraulic system, in particular for an automatic transmission of a motor vehicle, with an armature housing (15) which can be fluidically connected to hydraulic lines of the hydraulic system and filled with hydraulic medium, an armature (11) is mounted in the armature housing so as to be stroke adjustable (h₁, h₂), said armature (11) has a shut-off body (13) and divides the armature housing (15) into an outlet-side chamber (37) facing the current outlet (27, 33) and into an inner chamber (39) facing away therefrom, wherein an oil exchange takes place with a stroke movement (h₁, h₂) of the armature (11), in which an adjustment volume of the hydraulic medium overflows from the outlet-side chamber (37) into the inner chamber (39), wherein a hydraulic line (47, 53, 63, 65, 51, 55) leading to the outlet-side chamber (37) or to the inner chamber (39) of the armature housing (15) has at least one dirt collection element (67) formed as a permanent magnet which holds back impurities in the hydraulic medium which flows through the hydraulic line (47, 53, 63, 65, 51, 55) during an oil exchange, **characterised in that** the dirt collection element (67) is a dirt collection contour (69) formed on the inner wall of the hydraulic line (47, 53, 65) with protrusions (69) and depressions (71).

2. Electromagnetic valve according to claim 1, **characterised in that** the base (73) of the depressions (71) is magnetic.

3. Electromagnetic valve according to any one of the preceding claims, **characterised in that** the electromagnetic valve (1) has a hydraulic medium reservoir (55) to provide the adjustment volume of the hydraulic medium overflowing into the inner chamber (39), the hydraulic medium of said hydraulic medium reservoir has a higher degree of purity in comparison to the hydraulic medium in the hydraulic line (29, 31, 35) and which is fluidically connected to the outlet-side chamber (37) and **in that** the hydraulic medium reservoir (55) is in particular at least partly filled with disc-filtered hydraulic medium.

4. Electromagnetic valve according to claim 3, **characterised in that** the current outlet (33) between a partial line (29) leading to a working connection (A) of the electromagnetic valve (1) and a partial line (31) leading to a sump-side tank connection (T) is controlled by means of the shut-off body (13) and **in that** the hydraulic medium reservoir (55) is in particular formed with cross-sectional expansion of the partial line (31) leading to the sump-side tank connection (T).

5. Electromagnetic valve according to claim 4, **characterised in that** the electromagnetic valve (1) has a current interrupter (57) which prevents a back flow of impure hydraulic medium from a hydraulic medium sump (5) into the tank connection (T) or into the outlet-side chamber (37) during an oil exchange from the outlet-side chamber (37) into the inner chamber (39).

6. Electromagnetic valve according to claim 5, **characterised in that** the partial line (31) leading to the sump-side tank connection (T) is guided upwards in a vertical installation in a device vertical direction (z) to form the current interrupter (57) and/or **in that** the sump-side tank connection (T) is arranged geodetically above the hydraulic medium sump (5) by a height offset (Δz) and/or **in that** the tank connection (T) is in flow connection with the hydraulic medium sump (5) with the interconnection of a ventilation space (59).

7. Electromagnetic valve according to any one of the preceding claims, **characterised in that** the shut-off body (13) of the armature (11) is guided adjustably in a hydraulic chamber and with the formation of a valve gap (45, 49) between the hydraulic chamber and the shut-off body (13) providing bearing clearance and **in that** the hydraulic chamber is in particular connected to a hydraulic medium reservoir via a hydraulic line such that a leakage of disc-filtered hydraulic medium into the hydraulic chamber takes place through the valve gap (45, 49) and **in that** the disc-filtered hydraulic medium can in particular be filled into the hydraulic medium reservoir (55).

8. Electromagnetic valve according to claim 7, **characterised in that** the hydraulic medium reservoir (55) is formed with a cross-sectional expansion of the hydraulic chamber (25) and/or the drain line (51) and/or **in that** the hydraulic chamber (25) and/or the drain line (51) is connected to the outlet-side chamber (37) or the inner chamber (39) via a connection line (65) and **in that** the adjustment volume of the hydraulic medium is guided at least partly via the connection line (65) during an oil exchange and **in that** the dirt collection element (67) is in particular assigned to the connection line (65).

9. Electromagnetic valve according to any one of the preceding claims, **characterised in that** the outlet-side chamber (37) of the armature housing (15) is separated from the hydraulic line (31) via a valve housing wall (41) and **in that** the valve housing wall (41) has a bearing opening (43) through which the shut-off body (13) is guided with the formation of a valve gap (45) providing a bearing clearance and/or **in that** the outlet-side chamber (37) is in particular connected to the hydraulic line (31) by means of a connection line (47) and **in that** the adjustment volume of the hydraulic medium is at least partly guided via the connection line (47) during an oil exchange and **in that** the dirt collection element (67) is in particular assigned to the connection line (47).

10. Electromagnetic valve according to any one of the preceding claims, **characterised in that** the shut-off body (13) of the armature (11) is an axially-displaceable piston with an at least first coil (19) and/or second coil (21) and **in that** the control edge of the second coil (21) releases or closes a current outlet (27) between a pressure connection (P) of a pressure source (3) and the working connection (A) depending on the axial position of the piston (13) and the control edge of the first coil (19) releases or closes a current outlet (27) between the tank connection (T) and the working connection (A).

## Revendications

1. Vanne électromagnétique pour un système hydraulique, en particulier pour une boîte de vitesses automatique d'un véhicule automobile, avec un espace d'armature (15) pouvant être raccordé en écoulement à des conduites hydrauliques du système hydraulique, rempli de fluide hydraulique, dans lequel une armature (11) est montée mobile en translation (h1, h2) qui présente un corps d'obturation (13), laquelle armature (11) divise l'espace d'armature (15) en une chambre (37) côté passage, tournée vers le passage d'écoulement (27, 33) et en une chambre interne (39) éloignée de celle-ci, dans laquelle lors d'un mouvement de translation (h1, h2) de l'armature (11) il se produit un échange d'huile, pour lequel un volume déplacé du fluide hydraulique s'écoule de la chambre (37) côté passage à la chambre interne (39), dans laquelle une conduite hydraulique (47, 53, 63, 65, 51, 55) menant vers la chambre (37) côté passage ou vers la chambre interne (39) de l'espace d'armature (15) présente au moins un élément collecteur d'impuretés (67) réalisé sous la forme d'un aimant permanent, qui retient les impuretés dans le fluide hydraulique qui s'écoule lors d'un échange d'huile au travers de la conduite hydraulique (47, 53, 63, 65, 51, 55), **caractérisée en ce que** l'élément collecteur d'impuretés (67) est un contour collecteur d'impuretés formé sur la paroi intérieure de la conduite hydraulique (47, 53, 65) avec des élévations (69) et des cavités (71).

2. Vanne électromagnétique selon la revendication 1, **caractérisée en ce que** le fond (73) des cavités (71) est réalisé de manière magnétique.

3. Vanne électromagnétique selon l'une quelconque des revendications précédentes, **caractérisée en ce que** pour la préparation du volume déplacé s'écoulant dans la chambre interne (39) du fluide hydraulique la vanne électromagnétique (1) présente un réservoir de fluide hydraulique (55), dont le fluide hydraulique présente par rapport au fluide hydraulique dans la conduite hydraulique (29, 31, 35) un degré de pureté supérieur et qui est raccordé à la chambre (37) côté passage en écoulement, et **en ce qu'**en particulier le réservoir de fluide hydraulique (55) est rempli au moins partiellement du fluide hydraulique filtré par disque.

4. Vanne électromagnétique selon la revendication 3, **caractérisée en ce qu'**au moyen du corps d'obturation (13) le passage d'écoulement (33) est commandé entre une conduite partielle (29) menant à un raccord de travail (A) de la vanne électromagnétique (1) et une conduite partielle (31) menant à un raccord de réservoir (T) côté cuve, et **en ce qu'**en particulier le réservoir de fluide hydraulique (55) est formé sous élargissement de section transversale de la conduite partielle (31) menant au raccord de réservoir (T) côté cuve.

5. Vanne électromagnétique selon la revendication 4, **caractérisée en ce que** la vanne électromagnétique (1) présente un interrupteur d'écoulement (57) qui empêche lors de l'échange d'huile de la chambre (37) côté passage à la chambre interne (39) un reflux du fluide hydraulique non nettoyé d'une cuve de fluide hydraulique (5) dans le raccord de réservoir (T) ou dans la chambre (37) côté passage.

6. Vanne électromagnétique selon la revendication 5, **caractérisée en ce que** pour la formation de l'interrupteur d'écoulement (57) la conduite partielle (31) menant au raccord de réservoir (T) côté cuve est guidée vers le haut dans un guidage vertical dans un sens vertical d'appareil (z), et/ou **en ce que** le raccord de réservoir (T) côté cuve est agencé d'un déport vertical (Δz) de manière géodésique au-dessus de la cuve de fluide hydraulique (5), et/ou **en ce que** le raccord de réservoir (T) est en liaison d'écoulement avec la cuve de fluide hydraulique en intercalant un espace libre d'aération (59).

7. Vanne électromagnétique selon l'une quelconque des revendications précédentes, **caractérisée en ce que** le corps d'obturation (13) de l'armature (11) est guidé de manière réglable dans un espace hydraulique, et ce en formant une fente de vanne (45, 49) mettant à disposition un jeu de palier entre l'espace hydraulique et le corps d'obturation (13), et **en ce qu'**en particulier l'espace hydraulique est raccordé par le biais d'une conduite hydraulique à un réservoir de fluide hydraulique de sorte que par la fente de vanne (45, 49) une fuite de fluide hydraulique filtré par disque se produise dans l'espace hydraulique, et **en ce qu'**en particulier le fluide hydraulique filtré par disque peut être rempli dans le réservoir de fluide hydraulique (55).

8. Vanne électromagnétique selon la revendication 7, **caractérisée en ce que** le réservoir de fluide hydraulique (55) est formé par élargissement de section transversale de l'espace hydraulique (25) et/ou de la conduite de sortie (51), et/ou **en ce que** l'espace hydraulique (25) et/ou la conduite de sortie (51) est raccordée par le biais d'une conduite de raccordement (65) à la chambre (37) côté passage ou la chambre interne (39), et **en ce que** par le biais de la conduite de raccordement (65) au moins partiellement le volume déplacé du fluide hydraulique est guidé lors de l'échange d'huile, et **en ce que** l'élément collecteur d'impuretés (67) est associé en particulier à la conduite de raccordement (65).

9. Vanne électromagnétique selon l'une quelconque des revendications précédentes, **caractérisée en ce que** la chambre (37) côté passage de l'espace d'armature (15) est séparée par le biais d'une paroi de boîtier de vanne (41) de la conduite hydraulique (31), et **en ce que** la paroi de boîtier de vanne (41) présente une ouverture de palier (43) par laquelle le corps d'obturation (13) est guidé en formant une fente de vanne (45) mettant à disposition un jeu de palier, et/ou **en ce qu'**en particulier la chambre (37) côté passage est raccordée au moyen d'une conduite de raccordement (47) à la conduite hydraulique (31), et **en ce que** par le biais de la conduite de raccordement (47) au moins partiellement le volume déplacé du fluide hydraulique est guidé lors de l'échange d'huile, et **en ce qu'**en particulier l'élément collecteur d'impuretés (67) est associé à la conduite de raccordement (47).

10. Vanne électromagnétique selon l'une quelconque des revendications précédentes, **caractérisée en ce que** le corps d'obturation (13) de l'armature (11) est un piston mobile axialement avec un au moins premier collet annulaire (19) et/ou second collet annulaire (21), et **en ce que** l'arête de commande du second collet annulaire (21) libère ou ferme selon la position axiale du piston (13) un passage d'écoulement (27) entre un raccord de pression (P) d'une source de pression (3) et le raccord de travail (A), et l'arête de commande du premier collet annulaire (19) libère ou ferme un passage d'écoulement (27) entre le raccord de réservoir (T) et le raccord de travail (A).
